# EUROPÄISCHE PATENTSCHRIFT

(11) **EP 1 869 110 B1**
(45) Veröffentlichungstag und Bekanntmachung des Hinweises auf die Patenterteilung: **04.04.2012**
(21) Anmeldenummer: 06725542.2
(22) Anmeldetag: 04.04.2006
(51) Int. Cl.: C08J 9/00, C08K 3/34

(54) **NANOKOMPOSIT-SCHAUMSTOFF**
NANOCOMPOSITE-FOAM MATERIAL
MATIERE EXPANSEE NANOCOMPOSITE

(30) Priorität: 07.04.2005 DE 102005015983
(43) Veröffentlichungstag der Anmeldung: 26.12.2007
(73) Patentinhaber: BASF SE, 67056 Ludwigshafen (DE)
(72) Erfinder: SCHÄDLER, Volker, 67487 Maikammer (DE); GASCHLER, Wolfgang, 67063 Ludwigshafen (DE); SCHMIDT, Daniel, Savannah, Georgia 31401 (US); BREINER, Thomas, 67105 Schifferstadt (DE)
(86) Internationale Anmeldenummer: PCT/EP2006/061306
(87) Internationale Veröffentlichungsnummer: WO 2006/106104

(56) Entgegenhaltungen:
- EP-A- 1 321 489
- EP-A- 1 471 108
- EP-A1- 1 219 672
- WO-A-2004/074357
- US-A1- 2002 058 739
- US-A1- 2003 144 401

## Beschreibung

Die vorliegende Erfindung betrifft ein Verfahren zur Herstellung von Polymer-Schichtsilikat-Nanokomposit-Schaumstoffen, ein Verfahren zur Herstellung von Polymer-Schichtsilikat-Nanokompositen sowie die durch diese Verfahren herstellbaren Polymer-Schichtsilikat-Nanokomposit-Schaumstoffe und Polymer-Schichtsilikat-Nanokomposite.

In der Vergangenheit haben Nanokomposite basierend auf Schichtsilikaten, die mit organischen Gruppen modifiziert sind, breites Interesse erregt, da sie im Vergleich mit den entsprechenden Polymeren ohne Schichtsilikate bemerkenswerte Verbesserungen bei einigen Eigenschaften zeigen.

Es konnte gezeigt werden, dass, zusätzlich zu anderen Eigenschaften, ein verbessertes Elastizitätsmodul, eine bessere Hitzebeständigkeit, eine erhöhte Entflammbarkeit und eine geminderte Gasdurchlässigkeit erreicht werden können, wenn einige Prozent von entsprechend modifizierten Schichtsilikaten in die Polymermatrix eingebracht werden.

Eine Grundvoraussetzung, um eine hohe Dispersion des Schichtsilikats in dem Polymer zu erzielen ist, den gewöhnlich hydrophilen Ton mit den gewöhnlich hydrophoben Polymeren kompatibel zu machen.

Gegenstand der vorliegenden Erfindung ist ein Verfahren zur Herstellung von Nanokomposit-Schaumstoffen durch Aufschäumen von thermoplastischen Nanokompositen. Dabei ist es von Vorteil, wenn die in den Nanokompositen vorliegenden Silikate in den Thermoplasten eine möglichst hohe Dispersion zeigen.

Polymer-Schichtsilikat-Nanokomposite können durch verschiedene Verfahren hergestellt werden. Es sind verschiedene Methoden bekannt, um gute Dispersion der Schichtsilikate in den Polymeren zu erzielen.

Es ist möglich, die Schichtsilikate hydrophob zu modifizieren, indem die in den Zwischenschichten vorliegenden Kationen wie Na⁺, Ca²⁺ u. a. durch verschiedene Onium-Ionen ausgetauscht werden. Ein Onium-lon kann ein Tensid mit einer kationischen Kopfgruppe, und einem oder mehreren unpolaren Schwänzen, beispielsweise aliphatischen Kohlenwasserstoffen, Polypropylen-Glykolen und anderen, sein.

EP 1 155 079 P1 offenbart ein Verfahren zur Herstellung von Polymer-Ton-Nanokompositen. Dazu werden die einsetzbaren Tone organisch modifiziert, indem die in den Zwischenschichten des Tons vorliegenden Kationen durch wenigstens zwei organische Kationen, Ammonium- oder Phosphonium-lonen, wobei wenigstens ein Kation Kohlenstoffketten mit wenigstens 7 Kohlenstoffen aufweist und ein Kation Kohlenstoffketten mit mehr als 12 Kohlenstoffen aufweist, ausgetauscht werden. Diese modifizierten Tone werden mit dem geschmolzenen Polymer vermischt. Ein Nachteil dieses Verfahrens ist, dass der Ionenaustauch zur Modifizierung der Tone einen weiteren, aufwendigen Verfahrensschritt darstellt.

US 2002/0058739 A1 offenbart verbesserte Nanokomposit-Zusammensetzungen und ein Verfahren zu ihrer Herstellung. Dazu wird ein Ton an der Oberfläche durch Zusatz von Tensiden, Silanen oder anderen Modifikatoren hydrophobiert. Dieser hydrophobierte Ton wird dann wenigstens einem ethylenisch ungesättigten Monomeren, gegebenenfalls in wässriger Emulsion, zugesetzt, und die Monomere werden polymerisiert. In diesem Verfahren ist die Modifikation der Tone durch Ionenaustausch ein zusätzlicher nachteiliger Verfahrensschritt.

EP 1 141 136 P1 offenbart ein Verfahren zur Herstellung von Polymer-Nanokompositen durch Schmelzextrusion eines Polymeren in Gegenwart eines modifizierten Tons und funktionalisierten Oligomeren oder Polymeren. Die eingesetzten Tone werden durch Ionenaustausch der vorliegenden Kationen durch Onium-lonen, bevorzugt Ammonium-lonen, hydrophobiert. Dieser Ionentausch bildet einen nachteiligen zusätzlichen Verfahrensschritt.

Polymer, 43, 2002, 2123-2132 offenbart eine In situ-Polymerisation von Ethen in Gegenwart von nicht modifizierten Schichtsilikaten und weiteren Additiven wie Polyethylen, auf welches Maleinsäureanhydrid-Monomere gepfropft sind, zur Herstellung von Polymer-Nanokompositen. Diese Methode ist auf Nanokomposite enthaltend unpolare Polymere, wie beispielsweise Polyethylen, beschränkt.

EP 1 321 489 A1 offenbart ein Verfahren, um Nanokomposite auf Basis von Elastomeren herzustellen. Dazu werden Elastomere, wie Styrol-Butadien- oder Butadien-Acrylnitril-Copolymere mit Suspensionen von Schichtsilikaten gemischt. Das entsprechende Elastomer-Nanokomposit fällt aus der Lösung aus und kann abfiltriert werden. Elastomer-Nanokomposite sind nicht für die Herstellung von Nanokomposit-Schaumstoffen geeignet.

Thermoplastische Schäume beinhaltend Schichtsilikate werden in EP 1 219 672 A1 offenbart. Zur Herstellung der Schäume werden Schichtsilikate, die durch Ionenaustausch an der Oberfläche hydrophobiert worden sind und entsprechende Thermoplasten in einem Schmelzextruder vermengt. Durch verdampfbare oder in der Hitze zersetzliche Substanzen werden die thermoplastischen Nanokomposite aufgeschäumt. Nachteilig bei diesem Verfahren ist, dass die einsetzbaren Schichtsilikate in einem weiteren zusätzlichen Verfahrensschritt hydrophobiert werden müssen.

US 6,225,364 B1 offenbart ein Verfahren zur Herstellung von Schaumstoffen. Dazu wird ein aromatisches Polymer unter Druck mit einem Gemisch zweier Aufschäummittel imprägniert und anschließend durch Entspannen aufgeschäumt.

WO2004/074357 offenbart Polyvinylchlorid-Nanokomposit-Schäume mit Smektiten, lehr aber keine kationischen Gruppen.

Die im Stand der Technik offenbarten Verfahren zur Herstellung von Nanokomposit-Materialien weisen den Nachteil auf, dass die eingesetzten Schichtsilikate in einem zusätzlichen Schritt hydrophobiert werden müssen, damit eine genügende Dispersion der Schichtsilikate in dem Polymer gewährleistet werden kann. Die Hydrophobierung der Schichtsilikate geschieht gemäß den Verfahren des Standes der Technik durch Kationenaustausch der Metallkationen durch kationische Onium-Ionen, wie Ammonium, Sulfonium, Phosphonium, Pyrdinium oder Imidazolium. Diese Hydrophobierung geschieht in einem separaten Verfahrensschritt, was mit zusätzlichem Arbeitsaufwand verbunden ist.

Des Weiteren sind die durch die Verfahren des Standes der Technik erzielten Dispersionsgrade für einige Anwendungen nicht ausreichend.

Aufgabe der vorliegenden Erfindung ist es, ein Verfahren zur Herstellung von Polymer-Schichtsilikat-Nanokomposit-Schaumstoffen bereitzustellen, welches sich dadurch auszeichnet, dass die Schichtsilikate in den Polymeren eine besonders hohe Dispersion zeigen, ohne dass die Schichtsilikate in einem zusätzlichen Verfahrensschritt hydrophobiert werden müssen.

Diese Aufgabe wird gelöst durch ein Verfahren zur Herstellung von Polymer-Schichtsilikat-Nanokomposit-Schaumstoffen, welches die folgenden Schritte aufweist.
a) Mischen von kationisch stabilisierten Polymer-Latices mit wässrigen Suspensionen von anionischen nicht hydrophobierten Schichtsilikaten, die als Gegenionen Alkali- und/oder Erdalkalimetallionen aufweisen, wobei die entsprechenden thermoplastischen Polymer-Schichtsilikat-Nanokomposite ausfallen,
b) Isolieren und Trocknen der erhaltenen thermoplastischen Nanokomposite,
c) Imprägnieren der getrockneten Nanokomposite mit wenigstens einer organischen Verbindung, die bei 25°C und 1013 mbar flüssig ist und
d) Aufschäumen der imprägnierten Nanokomposite durch Absenkung des Druckes und/oder Erhöhung der Temperatur.

Ein Vorteil des erfindungsgemäßen Verfahrens besteht darin, dass die Schichtsilikate nicht in einem weiteren, aufwendigen Verfahrensschritt hydrophobiert werden müssen, aber dennoch eine hohe Dispersion in den Nanokompositen zeigen. Die Polymer-Schichtsilikat-Nanokomposite und die Polymer-Schichtsilikat-Nanokomposit-Schaumstoffe zeigen aufgrund der hohen Dispersionen verbesserte Eigenschaften bezüglich Hitzebeständigkeit, Entflammbarkeit und Gasdurchlässigkeit.

Die einzelnen Schritte a), b), c) und d) des erfindungsgemäßen Verfahrens zur Herstellung von Polymer-Schichtsilikat-Nanokomposit-Schaumstoffen gemäß der vorliegenden Erfindung werden im Folgenden näher erläutert.

### Schritt a):

In dem Verfahren gemäß der vorliegenden Erfindung werden in Schritt a) kationisch stabilisierte Polymer-Latices mit wässrigen Suspensionen von anionischen, nicht hydrophobierten Schichtsilikaten, die als Gegenionen Alkali- und/oder Erdalkalimetallionen aufweisen, gemischt, wobei die entsprechenden thermoplastischen Polymer-Schichtsilikat-Nanokomposite ausfallen.

In einer bevorzugten Ausführungsform wird der kationisch stabilisierte Polymer-Latex durch freie radikalische Polymerisation von vinylischen Monomeren (Komponente A) hergestellt.

Als vinylische Monomere (Komponente A) werden in das erfindungsgemäße Verfahren Monomere der allgemeinen Formel (I) eingesetzt. 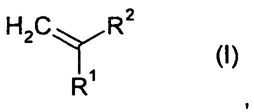 worin R¹ und R² die folgenden Bedeutungen haben:
- R¹:: Wasserstoff, gesättigtes oder ungesättigtes, verzweigtes, unverzweigtes oder cyclisches C₁-C₁₂-Alkyl, C₅-C₁₈-Aryl oder C₄-C₁₈-Heterocyclus, gegebenenfalls ein- oder mehrfach substituiert durch gesättigte oder ungesättigte, verzweigte, unverzweigte oder cyclische C₁-C₁₂-Alkylgruppen oder funktionelle Gruppen.
- R²:: Wasserstoff, Nitril-Gruppe, gesättigtes oder ungesättigtes, verzweigtes, unverzweigtes oder cyclisches C₁-C₁₂-Alkyl, C₅-C₁₈-Aryl oder C₄-C₁₈-Heterocyclus, gegebenenfalls ein- oder mehrfach substituiert durch gesättigte oder ungesättigte, verzweigte, unverzweigte oder cyclische C₁-C₁₂-Alkylgruppen oder funktionelle Gruppen.

Erfindungsgemäß einsetzbare funktionelle Gruppen sind ausgewählt aus der Gruppe bestehend aus primärer, sekundärer oder tertiärer Aminogruppe, Imino-, Amido-, Imido-, Ether-, Alkohol-, Aldehyd-, Keto-, Carbonsäure-, Nitril-Gruppe und Halogenen.

In einer weiteren Ausführungsform bedeutet R² einen Rest der allgemeinen Formel (II) 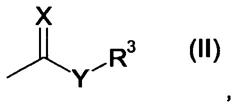 worin
- X: O, S, NH oder CH₂,
- Y: O, S, NH oder CH₂ und
- R³:: Wasserstoff, gesättigtes oder ungesättigtes, verzweigtes, unverzweigtes oder cyclisches C₁-C₁₂-Alkyl, C₅-C₁₈-Aryl oder C₄-C₁₈-Heterocyclus, gegebenenfalls ein- oder mehrfach substituiert durch gesättigte oder ungesättigte, verzweigte, unverzweigte oder cyclische C₁-C₁₂-Alkylgruppen oder funktionelle Gruppen.

Erfindungsgemäß einsetzbare funktionelle Gruppen sind ausgewählt aus der Gruppe bestehend aus primärer, sekundärer oder tertiärer Aminogruppe, Imino-, Amido-, Imido-, Ether-, Alkohol-, Aldehyd-, Keto-, Carbonsäure-, Nitril-Gruppe und Halogenen.

In einer bevorzugten Ausführungsform ist R¹ Wasserstoff oder linearer oder verzweigter C₁-C₆-Alkylrest, besonders bevorzugt ist R¹ Wasserstoff, Methyl oder Ethyl.

In einer bevorzugten Ausführungsform ist
- R²:: eine Nitrilgruppe oder ein gegebenenfalls substituierter C₆-C₁₈-Alkylrest oder ein Heterocyclus mit 4 bis 12 Kohlenstoffatomen, der gesättigt oder ungesättigt sein kann und als Heteroatome Sauerstoff, Schwefel und/oder Stickstoff aufweist
oder
ein Rest der allgemeinen Formel (II), wobei X Sauerstoff und Y Sauerstoff oder NH bedeuten und R³ die folgenden Bedeutungen hat:
- R³:: linearer oder verzweigter C₁-C₁₀-Alkylrest, wobei ein oder mehrere Kohlenstoffatome durch Sauerstoffatome oder N-R⁴-Gruppierung ersetzt sein können, wobei R⁴ für einen gesättigten oder ungesättigten Alkylrest mit 1 bis 6 Kohlenstoffatomen steht.

In einer besonders bevorzugten Ausführungsform ist das vinylische Monomer ausgewählt aus der Gruppe bestehend aus: 2-Vinylpyridin, 4-Vinylpyridin, Ethyl-2-vinylpyridin, 1-Benzyl-4-vinylpyridin, 1,2-Dimethyl-5-vinylpyridin, 1-Methyl-2-vinylchinolin, N-Vinyl-N-methylimidazol, 1-Vinyl-3-methylbenzylimidazol, Styrol, Methylstyrol, Vinyltoluol, Monochlorstyrol, Ethylencarbonsäureesther wie Methyl-, Ethyl-, Propyl-, Isopropyl-, Butyl-, 2-Ethylhexyl-, Hydroxyethyl-, Hydroxypropyl- oder Glycidyl-acrylat, die Ethylenamide und ihre Stickstoff-substituierten Derivate, wie Acrylamid, Methacrylamid, N-Methylol-acrylamid, N-Methylol-methacrylamid, N-Methoxymethyl-acrylamid oder -methacrylamid.

Die genannten vinylischen Monomere (Komponente A) können allein oder auch in Mischung miteinander verwendet werden, so fern sie untereinander copolymerisierbar sind.

Die erfindungsgemäßen Copolymere enthalten zusätzlich wenigstens eine Verbindung mit einer radikalisch polymerisierbaren, α,β-ethylenisch ungesättigten Doppelbindung und wenigstens einer kationogenen und/oder kationischen Gruppe pro Molekül (Komponente B).

Bevorzugt handelt es sich bei den kationogenen bzw. kationischen Gruppen der Komponente B um eine Gruppe ausgewählt aus der Gruppe bestehend aus Ammonium, Pyridinium, Sulfonium, Phosphonium und Imidazolium. Besonders bevorzugt sind stickstoffhaltige Gruppen, wie primäre, sekundäre und tertiäre Aminogruppen sowie quarternäre Ammoniumgruppen. Bevorzugt werden diese Verbindungen in nicht geladener Form zur Polymerisation eingesetzt. Geeignet ist jedoch auch ein Einsatz in geladener Form. Geladene kationische Gruppen lassen sich z.B. aus den Aminstickstoffen durch Protonierung, z.B. mit einwertigen oder mehrwertigen Carbonsäuren, wie Milchsäure oder Weinsäure, oder Mineralsäuren, wie Phosphorsäure, Schwefelsäure und Salzsäure erzeugen.

Komponente B kann ausgewählt sein aus Estern α,β-ethylenisch ungesättigter Mono- und Dicarbonsäuren mit Aminoalkoholen, welche am Aminstickstoff mono- oder dialkyliert sein können, Amiden α,β-ethylenisch ungesättigter Mono- und Dicarbonsäuren mit Diaminen, welche mindestens eine primäre oder sekundäre Aminogruppe aufweisen, N,N-Diallylamin, N,N-Diallyl-N-alkylaminen und deren Derivaten, vinyl- und allylsubstituierten Stickstoffheterocyclen, vinyl- und allylsubstituierten heteroaromatischen Verbindungen und Mischungen davon.

Als Säurekomponente dieser Ester eignen sich z.B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden Acrylsäure, Methacrylsäure und deren Gemische eingesetzt. Beispiele für solche Verbindungen sind N-Methylaminoethyl(meth)acrylat, N-Ethylaminoethyl(meth)acrylat, N-(n-Propyl)aminoethyl(meth)acrylat, N-(n-Butyl)aminoethyl(meth)acrylat, N-(tert.-Butyl)aminoethyl(meth)acrylat, N,N-Dimethylaminomethyl(meth)acrylat, N, N-Dimethylaminoethyl(meth)acrylat, N,N-Diethylaminoethyl(meth)acrylat, N,N-Dimethylaminopropyl(meth)acrylat, N,N-Diethylaminopropyl(meth)acrylat und N,N-DimethylaminocyGohexyl(meth)acrylat.

Bevorzugt werden als Komponente B N-(tert.-Butyl)aminoethylacrylat und N-(tert.-Butyl)aminoethylmethacrylat eingesetzt.

Als Komponente B geeignete Monomere sind weiterhin die Amide der zuvor genannten α,β-ethylenisch ungesättigten Mono- und Dicarbonsäuren mit Diaminen, welche mindestens eine primäre oder sekundäre Aminogruppe aufweisen. Bevorzugt sind Diamine, die eine tertiäre und eine primäre oder sekundäre Aminogruppe aufweisen. Bevorzugt werden als Komponente B N-[2-(dimethylamino)ethyl]acrylamid, N-[2-(dimethylamino)ethyl]methacrylamid, N-[3-(dimethylamino)propyl]acrylamid, N-[3-(dimethylamino)propyl]methacrylamid, N-[4-(dimethylamino)butyl]acrylamid, N-[4-(dimethylamino)-butyl]methacrylamid, N-[2-(diethylamino)ethyl]acrylamid, N-[4-(dimethylamino)cyclohexyl]acrylamid und N-[4-(dimethylamino)cyclohexyl]-methacrylamid eingesetzt. Besonders bevorzugt werden N-[3-(dimethyl-amino)propyl]-acrylamid und/oder N-[3-(dimethylamino)propyl]methacrylamid eingesetzt.

Diese kationogenen Monomere können auch in quarternierter Form vorliegen. Die Quarternisierung erfolgt bei den oben genannten Monomeren gegebenenfalls unter Verwendung von Methylchlorid, Methylsulfat oder Diethylsulfat.

Weitere als Komponente B geeignete Monomere sind weiterhin N,N-Diallylamine und N,N-Diallyl-N-alkylamine und deren Säureadditionssalze. Alkyl steht dabei vorzugsweise für C₁-C₂₄-Alkyl. Bevorzugt ist z.B. N,N-Diallyl-N-methylamin.

Diese kationogenen Monomere können auch in quarternierter Form vorliegen. Die Quarternisierung erfolgt mit üblichen Quarternierungsmittein wie beispielsweise Methylchlorid, Methylsulfat oder Diethylsulfat.

Weitere als Komponente B geeignete Monomere sind vinyl- und allylsubstituierte Stickstoffheterocyclen, wie N-Vinylimidazol, N-Vinylimidazol-Derivate, z.B. N-Vinyl-2-methylimidazol, vinyl- und allylsubstituierte heteroaromatische Verbindungen, wie 2-und 4-Vinylpyridin, 2- und 4-Allylpyridin, und die Salze davon.

Als Komponente B geeignete Monomere sind auch N-Vinylimidazole der allgemeinen Formel (III), worin R⁴ bis R⁶ für Wasserstoff, C₁-C₄-Alkyl oder Phenyl steht

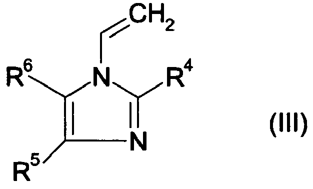

Beispiele für Verbindungen der allgemeinen Formel (III) sind Tabelle 1 zu entnehmen:

**Tabelle 1:**

| R⁴ | R⁵ | R⁶ |
|---|---|---|
| H | H | H |
| CH₃ | H | H |
| H | CH₃ | H |
| H | H | CH₃ |
| CH₃ | CH₃ | H |
| H | CH₃ | CH₃ |
| CH₃ | H | CH₃ |
| Phenyl | H | H |
| H | Phenyl | H |
| H | H | Phenyl |
| Phenyl | CH₃ | H |
| Phenyl | H | CH₃ |
| CH₃ | Phenyl | H |
| H | Phenyl | CH₃ |
| H | CH₃ | Phenyl |
| CH₃ | H | Phenyl |

In einer besonders bevorzugten Ausführungsform der Erfindung ist Komponente B ausgewählt aus N-(tert.-Butyl)aminoethyl(meth)acrylat, N,N-Dimethylaminoethyl(meth)acrylat, N-[3-(dimethylamino)propyl](meth)acrylamid, Vinylimidazol und Mischungen davon.

Als Komponente B können diese kationogenen Monomere auch in quarternierter Form vorliegen. Die Quarternisierung erfolgt mit üblichen Quarternierungsmitteln wie beispielsweise Methylchlorid, Methylsulfat oder Diethylsulfat.

In einer bevorzugten Ausführungsform wird das kationisch stabilisierte Polymer-Latex hergestellt durch freie radikalische Polymerisation von vinylischen Monomeren, wobei 0,2 bis 10 Gew.-% davon Gruppen aufweisen, die permanent kationisch sind oder durch Änderung des pH-Wertes kationisch werden (Komponente B).

Die Methode der radikalisch initiierten wässrigen Emulsionspolymerisation ist vielfach vorbeschrieben und dem Fachmann daher hinreichend bekannt, vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und DE-A 40 03 422.

Die radikalisch initiierte wässrige Emulsionspolymerisation erfolgt üblicherweise so, dass man die Monomeren, in der Regel unter Mitverwendung von Dispergiermitteln, in wässrigem Medium dispers verteilt und mittels wenigstens eines radikalischen Polymerisationsinitiators polymerisiert.

### Initiatoren

Als radikalische Polymerisationsinitiatoren kommen für die erfindungsgemäße radikalische wässrige Emulsionpolymerisation alle diejenigen in Betracht, die in der Lage sind, eine radikalische wässrige Emulsionspolymerisation auszulösen.

Es kann sich dabei prinzipiell sowohl um Peroxide als auch um Azoverbindungen handeln. Es kommen auch Redoxinitiatorsysteme in Betracht.

Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, tert.-Butylperpivalat sowie Dialkyl- oder Diarylperoxide, wie Di-tert.-Butyl- oder Di-Cumylperoxid, 2,5-Dimethyl-2,5-di(t)butylperoxy(hexan) oder Dibenzoylperoxid eingesetzt werden.

Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50^{™} von Wako Chemicals), 1,1'-Azo-bis-(1-cyclohexancarbonitril), 2,2'-Azobis(2-amidinopropan)salze, 4,4'-Azobis(4-Cyanovaleriansäure) oder 2-(Carbamoylazo)-isobutyronitril Verwendung.

Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatischer Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Die Initiatoren werden üblicherweise in Mengen bis zu 10, vorzugsweise 0,02 bis 5 Gew.%, bezogen auf die zu polymerisierenden Monomeren eingesetzt.

### Tenside und Schutzkolloide

In einer bevorzugten Ausführungsform liegen zusätzlich zu den vinylischen Monomeren bei der Herstellung des Polymer-Latex Tenside vor, wobei 0,2 bis 10 Gew.%, bevorzugt 0,3 bis 5 Gew.-%, besonders bevorzugt 0,5 bis 3 Gew.-% davon Gruppen aufweisen, die permanent kationisch sind oder die durch Änderung des pH-Wertes kationisch werden. Die kationischen Gruppen sind in einer bevorzugten Ausführungsform ausgewählt aus Ammonium, Pyridinium, Sulfonium, Phosphonium und Imidazolium. Es können auch zusätzlich oder stattdessen Schutzkolloide vorliegen.

Bei der Herstellung der in den erfindungsgemäßen Zubereitungen verwendeten Polymeren wird wenigstens ein Dispergierhilfsmittel verwendet, das sowohl die Monomertröpfchen als auch Polymerisatteilchen in der wässrigen Phase dispers verteilt halten kann und so die Stabilität der erzeugten wässrigen Polymerisatdispersion gewährleistet. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961.

Es können auch Gemische aus Emulgatoren und/oder Schutzkolloiden verwendet werden. Vorzugsweise werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxylierte Mono-, Di- und Tri-Alkylphenole (EO-Grad: 3 bis 50, Alkylrest: C₄ bis C₁₂), ethoxylierte Fettalkohole (EO-Grad: 3 bis 50; Alkylrest: C₈ bis C₃₆) sowie Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxylierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als nichtionische Tenside sind beispielsweise geeignet die Umsetzungsprodukte von aliphatischen Alkoholen oder Alkylphenolen mit 6 bis 20 Kohlenstoffatomen in der Alkylkette, die linear oder verzweigt sein kann, mit Ethylenoxid und/oder Propylenoxid. Die Menge Alkylenoxid beträgt ca. 6 bis 60 Mole auf ein Mol Alkohol. Ferner sind Alkylaminoxide, Mono- oder Dialkylalkanolamide, Fettsäureester von Polyethylenglykolen, ethoxylierte Fettsäureamide, Alkylpolyglykoside, Alkylglykolalkoxylate und -diglykolalkoxylate oder Sorbitanetherester geeignet.

Tenside, die permanent kationisch vorliegen sind beispielsweise quarternäre Ammoniumverbindungen der allgemeinen Formel NR⁷R⁸R⁹R¹⁰ mit Gegenionen ausgewählt aus der Gruppe bestehend aus Halogeniden, Sulfaten und Mischungen davon, bevorzugt Chlorid, wobei R⁷ ein langkettiger, verzweigter oder unverzweigter Alkyl-, Cycloalkyl- oder Alkenylrest ist, bevorzugt ein gesättigter oder ungesättigter, geradzahliger oder ungeradzahliger C₁₂ bis C₂₀ Alkylrest, besonders bevorzugt ein gesättigter C₁₂, C₁₆ oder C₁₈ Alkylrest oder Mischungen davon, und R⁸, R⁹ und R¹⁰ kurzkettige, verzweigte oder unverzweigte Alkyl-, Cycloalkyl- Alkenyl- und/oder Arylreste mit 1 bis 8 Kohlenstoffatomen sind. Bevorzugt sind die Reste R⁸, R⁹ und R¹⁰ ausgewählt aus Methyl, Ethyl, Benzyl.

In der Regel beträgt die Menge an eingesetztem Dispergierhilfsmittel 0,1 bis 5 Gew.-%, bevorzugt 0,5 bis 3 Gew.-%, jeweils bezogen auf die Gesamtmenge der radikalisch zu polymerisierenden Monomeren. Häufig ist es günstig, wenn eine Teil- oder die Gesamtmenge des Dispergierhilfsmittels dem flüssigen Reaktionsmedium vor der Initiierung der radikalischen Polymerisation zugeführt wird. Darüber hinaus kann eine Teil- oder die Gesamtmenge des Dispergierhilfsmittels dem Reaktionsmedium vorteilhaft auch gemeinsam mit den zu polymerisierenden Monomeren, insbesondere in Form einer wässrigen Monomerenemulsion während der Polymerisation zugeführt werden. Bevorzugt ist eine Kombination aus ionischen und nicht ionischen Dispergierhilfsmitteln.

### Regler

Als Regler werden bevorzugt Alkanthiole eingesetzt. Es können auch Gemische von mehreren Reglern eingesetzt werden.

Es werden verzweigte Alkanthiole mit einer C-Kettenlänge von C₁₀ bis C₂₂ eingesetzt. Besonders bevorzugt sind lineare Alkanthiole, weiterhin bevorzugt sind Alkanthiole mit einer Kettenlänge von C₁₂ bis C₂₂, insbesondere von C₁₂ bis C₁₈. Als bevorzugte Alkanthiole sind genannt n-Decanthiol, n-Dodecanthiol, tert.-Dodecanthiol, n-Tetradecanthiol, n-Pentadecanthiol, n-Hexadecanthiol, n-Heptadecanthiol, n-Octadecanthiol, n-Nonadecanthiol, n-Eicosanthiol, n-Docosanthiol. Besonders bevorzugt sind lineare, geradzahlige Alkanthiole. Die Alkanthiole können auch in Mischungen eingesetzt werden.

Die Alkanthiole werden üblicherweise in Mengen von 0,1 bis 5 Gew.%, insbesondere 0,25 bis 2 Gew.-% bezogen auf die zu polymerisierenden Monomere eingesetzt. Üblicherweise werden die Alkanthiole zusammen mit den Monomeren der Polymerisation zugesetzt.

Insbesondere bevorzugt zur Verwendung als Regler ist tert.-Dodecanthiol.

### Durchführung der Emulsionspolymerisation

Die Emulsionspolymerisation erfolgt üblicherweise unter Sauerstoffausschluss, beispielsweise unter Stickstoff- oder Argonatmosphäre, bei Temperaturen im Bereich von 20 bis 200°C. Vorteilhaft sind Polymerisationstemperaturen im Bereich von 50 bis 130, insbesondere 70 bis 95°C.

Bei der radikalisch initiierten Emulsionspolymerisation ist insbesondere bei höheren Temperaturen zur Vermeidung von Koagulatbildung darauf zu achten, dass das Polymerisationsgemisch nicht siedet. Dies kann beispielsweise dadurch vermieden werden, dass die Polymerisationsreaktion bei einem Inertgasdruck erfolgt, welcher höher ist als der Dampfdruck des Polymerisationsgemisches, beispielsweise 1,2 bar, 1,5 bar, 2 bar, 3 bar, 5 bar, 10 bar oder noch höher (jeweils Absolutwerte). Die Polymerisation kann diskontinuierlich, semikontinuierlich oder kontinuierlich durchgeführt werden. Häufig erfolgt die Polymerisation bzw. die Monomeren- und die Reglerdosierung semikontinuierlich nach dem Zulaufverfahren.

Die Mengen an Monomeren und Dispergiermittel wählt man zweckmäßigerweise so, dass man eine 30 bis 80 gew.%ige Dispersion der Copolymerisate enthält. Vorzugsweise dosiert man zumindest einen Teil der Monomere, Initiatoren und gegebenenfalls Regler während der Polymerisation gleichmäßig in das Reaktionsgefäß (Zulauffahrweise). Die Monomere und der Initiator können jedoch auch im Reaktor vorgelegt und polymerisiert werden, wobei gegebenenfalls gekühlt werden muss.

Gemäß einer bevorzugten Ausführungsform führt man die Polymerisation unter Verwendung eines Saatlatex durch. Zweckmäßigerweise wird der Saatlatex aus den zu polymerisierenden Polymeren in der ersten Polymerisationsphase in üblicher Weise hergestellt. Anschließend gibt man den verbleibenden Teil der Monomerenmischung zu, vorzugsweise nach dem Zulaufverfahren.

Die Polymerisationsreaktion erfolgt vorteilhaft bis zu einem Monomerenumsatz > 95 Gew.-%, bevorzugt > 98 Gew.-% oder > 99 Gew.-%.

Häufig ist es sinnvoll, wenn die erhaltene wässrige Polymerisatdispersion zur weiteren Absenkung der nicht umgesetzten Monomerenmenge einem Nachpolymerisationsschritt unterzogen wird. Diese Maßnahme ist dem Fachmann bekannt (beispielsweise EP-B 3957, EP-B 28348, EP-B 563726, EP-A 764699, EP-A 767180, DE-A 3718 520, DE-A 3834734, DE-A 4232194, DE-A 19529599, DE-A 19741187, DE-A 19839199, DE-A 19840586, WO 95/33775 oder US 4529753).

Die kationisch stabilisierten Latices können auch erhalten werden durch Umsetzung von anionischen oder nichtionischen Latices mit kationischen Verbindungen, beispielsweise Umsetzung von einem anionischen SBR-Latex mit einem Alkylaminpolyoxyethylen-Addukt gemäß GB 2 221 913 A.

Die erfindungsgemäß einsetzbaren kationisch stabilisierten Latices können auch erhalten werden durch einen mehrstufigen Prozess gemäß FR 02540127, in dem zunächst ein stickstoffhaltiges Monomer mit einem weiteren Monomer umgesetzt wird, und dieses Umsetzungsprodukt in einem zweiten Schritt mit einem Dien und einem nichtionischen Monomer zur Reaktion gebracht wird.

Des Weiteren können kationisch stabilisierte Latices erfindungsgemäß eingesetzt werden, die erhalten werden, indem ein nichtionischer, wasserunlöslicher Polymerkern, der durch Emulsionspolymerisation erhalten wird, auf der Oberfläche mit ionischen Gruppen, beispielsweise Sulfonium-, Ammonium- oder Sulfonat-Gruppen versehen wird, wie in US 4,337,185 offenbart.

In Schritt a) des erfindungsgemäßen Verfahrens zur Herstellung von Polymer-Schichtsilikat-Nanokomposit-Schaumstoffen wird der zuvor erläuterte kationisch stabilisierte Polymer-Latex mit wässrigen Suspensionen von anionischen, nicht hydrophobierten Schichtsilikaten, die als Gegenionen Alkali- und/oder Erdalkalimetallionen aufweisen, vermischt, so dass die entsprechenden thermoplastischen Polymer-Schichsilikat-Nanokomposite ausfallen.

Die in Schritt a) des erfindungsgemäßen Verfahrens einsetzbaren anionischen, nicht hydrophobierten Schichtsilikate sind ausgewählt aus der Gruppe bestehend aus in Wasser quellbaren Tonen, Vermikulit, Glimmer und Mischungen davon. Bevorzugt aus den in Wasser quellbaren Tonen sind Smektite. Besonders bevorzugt sind die Smektite ausgewählt aus der Gruppe bestehend aus Montmorilloniten, Hektoriten, Nontroniten, Beidelliten, Volkonskoiten, Saponiten, Sauconiten, Sobocktiten, Sterensiten, Sinforditen und Mischungen davon., aus denen Montmorillonite und Hektorite besonders bevorzugt sind. Es können auch Mischungen der genannten Schichtsilikate eingesetzt werden. Die genannten Schichtsilikate weisen als Gegenionen Alkali- und/oder Erdalkalimetallionen auf. So sind in den Zwischenschichten der genannten Schichtsilikate wenigstens eines ausgewählt aus Natriumionen und Kaliumionen, des Weiteren Calciumionen und/oder Magnesiumionen. Es können allerdings auch weitere kationisch austauschbare Ionen vorliegen.

Besonders bevorzugt ist Montmorillonitton, welcher in den Zwischenschichten NatriumIonen aufweist; es können allerdings auch zusätzlich kleine Anteile von kationisch austauschbaren Ionen, wie beispielsweise Calcium-Ionen vorliegen.

In Schritt a) des Verfahrens zur Herstellung von Polymer-Schichtsilikat-Nanokomposit-Schaumstoffen wird ein kationisch stabilisierter Polymer-Latex mit einer wässrigen Suspension der anionischen, nicht hydrophobierten Schichtsilikate vermischt.

Dieses Vermischen wird durchgeführt, indem zu einer Dispersion des entsprechenden anionischen Schichtsilikats in Wasser eine Dispersion des entsprechenden Latex zugegeben wird. Diese Zugabe wird bei einer Temperatur von 20 bis 100°C, bevorzugt 40 bis 90°C, besonders bevorzugt 60 bis 80°C, durchgeführt. Der Anteil an Schichtsilikat beträgt in einer bevorzugten Ausführungsform 0,5 bis 50 Gew.%, besonders bevorzugt 1 bis 30 Gew.-%, bezogen auf die Summe der Massen von Schichtsilikat und Polymer.

Zusätzlich zu der Dispersion des Schichtsilikats und der Dispersion des Latex kann auch eine Mineralsäure, ausgewählt aus der Gruppe bestehend aus Schwefelsäure, Salzsäure, Phosphorsäure und Salpetersäure beim Vermischen der beiden Dispersionen vorliegen. Die genannte Mineralsäure oder Gemische von mehreren der genannten Mineralsäuren wird dabei in wässriger Lösung zugegeben, deren Konzentrationen 0,1 bis 5 normal, bevorzugt 0,2 bis 2 normal, besonders bevorzugt 0,4 bis 1 normal beträgt. Nach vollständiger Zugabe der Latex-Dispersion zu der Schichtsilikat-Dispersion wird 15 Minuten bis 3 Stunden, bevorzugt 30 Minuten bis 2 Stunden bei der Zugabetemperatur gerührt. Nach beendeter Umsetzung wird das Reaktionsgemisch auf eine Temperatur von 20 bis 30°C abgekühlt. Das entsprechende Polymer-Schichtsilikat-Nanokomposit liegt nun in fester Form in der entsprechenden Lösung dispergiert vor.

### Schritt b)

Dieser Schritt des erfindungsgemäßen Verfahrens beinhaltet Isolieren und Trocknen der erhaltenen thermoplastischen Nanokomposite. Die in Schritt a) des Verfahrens erhaltenen Nanokomposite können nach dem Fachmann bekannten Methoden isoliert werden. Beispielsweise können die Nanokomposite durch Filtration, Zentrifugation oder Abdekantieren von der Lösung abgetrennt werden. Das Trocknen der hergestellten Nanokomposite erfolgt ebenfalls nach dem Fachmann bekannten Methoden, beispielsweise durch Erhitzen auf Temperaturen von 50 bis 100°C, bevorzugt 60 bis 90°C, wobei die Temperatur unterhalb der Schmelztemperatur des Polymers liegen muss. Die Trocknung der Nanokomposite kann bei Atmosphärendruck, oder bei einem Druck unterhalb von Atmosphärendruck, bevorzugt von ≤ 800 mbar, besonders bevorzugt ≤ 400 mbar durchgeführt werden.

### Schritt c)

Die getrockneten Nanokomposite aus Schritt b) werden in Schritt c) mit wenigstens einer organischen Verbindung, die bei 25°C und 1013 mbar flüssig ist, imprägniert. Dazu werden die trockenen Nanokomposite mit der entsprechenden organischen Flüssigkeit vollständig überschichtet. Geeignete Methoden sind dem Fachmann bekannt.

Als organische Flüssigkeiten sind solche geeignet, die bei 25°C und einem Normaldruck von 1013 mbar in flüssiger Form vorliegen. Des Weiteren sollte der Siedepunkt bei Temperaturen von ≤ 200°C bei einem Druck von 1013 mbar liegen.

In einer bevorzugten Ausführungsform ist die organische Flüssigkeit ein C₁-C₁₂-Kohlenwasserstoff. Dieser kann gegebenenfalls wenigstens eine funktionelle Gruppe ausgewählt aus der Gruppe bestehend aus Ether-, Keton-, Aldehyd-, Alkohol-, und Aminogruppe oder Halogen aufweisen.

Beispielhaft genannt sind Alkane wie Pentan, Hexan, Heptan, Octan, Nonan, Ether wie Dimethylether, Diethylether, tert.-Butyl-methylether, Alkohole wie Methanol, Ethanol, Propanol, Isopropanol, Butanol, Ketone wie Aceton, aromatische Verbindungen wie Benzol, Toluol oder halogenierte Lösungsmittel, wie Dichlormethan, Chloroform, Tetrachlorkohlenstoff.

### Schritt d)

Schritt d) des Verfahrens beinhaltet das Aufschäumen der in Schritt c) imprägnierten Nanokomposite durch Absenken des Umgebungsdruckes und/oder Erhöhung der Temperatur.

Die organischen Flüssigkeiten, mit denen die Nanokomposite in Schritt c) imprägniert wurden, gehen bei Absenken des Druckes und/oder Erhöhung der Temperatur vom flüssigen in den gasförmigen Zustand über.

In Schritt d) wird die Temperatur auf bis zu 180°C, bevorzugt auf bis zu 150°C, besonders bevorzugt auf bis zu 120°C, erhöht. Anstelle einer Temperaturerhöhung kann auch der Druck abgesenkt werden, während die Temperatur gleich bleibt. Erfindungsgemäß wird der Druck auf ≤ 800 mbar, bevorzugt ≤ 400 mbar, besonders bevorzugt ≤ 100 mbar, abgesenkt. Es ist auch möglich, dass eine Temperaturerhöhung und eine Druckerniedrigung gleichzeitig durchgeführt werden. Eine Temperaturerhöhung kann so durchgeführt werden, dass die imprägnierten Nanokomposit-Teilchen in einem Gefäß vorliegen, welches evakuiert wird. Des Weiteren ist es auch möglich, dass die imprägnierten Nanokomposit-Teilchen in eine siedende Flüssigkeit, beispielsweise Wasser, eingebracht werden. Durch das Verdampfen der organischen Flüssigkeiten durch Temperaturerhöhung und/oder Druckerniedrigung werden die Nanokomposit-Teilchen aufgeschäumt.

Die aufgeschäumten Nanokomposit-Teilchen haben eine Dichte von 20 bis 100 g/l, bevorzugt 30 bis 80 g/l, besonders bevorzugt 40 bis 60 g/l.

In einer bevorzugten Ausführungsform können die in Schritt a) des Verfahrens erhaltennen Nanokomposite vor Imprägnierung und Aufschäumung mit weiteren Homo- oder Copolymeren enthaltend vinylische Monomere vermischt werden. So können Nanokomposit-Schäume hergestellt werden, die einen niedrigeren Schichtsilikatanteil aufweisen. Bevorzugt werden als Homo- oder Copolymere thermoplastische Polymere eingesetzt, beispielsweise Polystyrol.

Die vorliegende Erfindung betrifft auch einen thermoplastischen Polymer-Schichtsilikat-Nanokomposit-Schaumstoff, enthaltend wenigstens ein Polymer, welches hergestellt wird durch freie radikalische Polymerisation von vinylischen Monomeren, wobei 0,2 bis 10 Gew.-%, bevorzugt 0,3 bis 7 Gew.-%, besonders bevorzugt 0,5 bis 5 Gew.-% davon Gruppen aufweisen, die permanent kationisch sind oder die durch Änderung des pH-Wertes kationisch werden und gegebenenfalls Tenside, wobei 0,2 bis 10 Gew.-%, bevorzugt 0,3 bis 5 Gew.%, besonders bevorzugt 0,5 bis 3 Gew.-% davon Gruppen aufweisen, die permanent kationisch sind oder die durch Änderung des pH-Wertes kationisch werden, und nicht hydrophobierten Schichtsilikate ausgewählt sind aus der Gruppe bestehend aus Smektiten, Vermikuliten, Glimmer und Mischungen davon.

Des Weiteren betrifft die vorliegende Erfindung auch ein Verfahren zur Herstellung von thermoplastischen Polymer-Schichtsilikat-Nanokompositen, welches die folgenden Schritte aufweist
i) Herstellung von kationisch stabilisierten Polymer-Latices durch Umsetzung von Monomeren ausgewählt aus der Gruppe bestehend aus 2-Vinylpyridin, 4-Vinylpyridin, Ethyl-2-vinylpyridin, 1-Benzyl-4-vinylpyridin, 1,2-Dimethyl-5-vinylpyridin, 1-Methyt-2-vinylchinolin, N-Vinyl-N-methylimidazol, 1-Vinyl-3-methylbenzylimidazol, Styrol, Methylstyrol, Vinyltoluol, Monochlorstyrol, Methyl-, Ethyl-, Propyl-, Isopropyl-, Butyl-, 2-Ethylhexyl-, Hydroxyethyl-, Hydroxypropyl- oder Glycidyl-acrylat, Acrylamid, Methacrylamid, N-Methylol-acrylamid, N-Methylol-methacrylamid, N-Methoxymethyl-acrylamid oder -methacrylamid und Mischungen davon
   mit 0,2 bis 10 Gew.-% eines Monomers, das Gruppen aufweist, die permanent kationisch sind oder durch Änderung des pH-Wertes kationisch werden, ausgewählt aus der Gruppe bestehend aus N-Vinylimidazol und die Salze davon, und Mischungen davon, wobei zusätzlich zu den vinylischen Monomeren Tenside vorliegen, wobei 0,2 bis 10 Gew.-% davon Gruppen aufweisen, die permanent kationisch sind oder die durch Änderung des pH-Wertes kationisch werden
ii) Mischen der so erhaltenen kationischen Latices mit wässrigen Suspensionen von anionischen Schichtsilikaten, die als Gegenionen Alkali- und/oder Erdalkalimetallionen aufweisen, wobei die entsprechenden Polymer-Schichtsilikat-Nanokomposite ausfallen und
iii) gegebenenfalls Isolieren und Trocknen der erhaltenen Nanokomposite.

Die kationogenen Monomere können auch in quarternierter Form vorliegen. Die Quartemisierung erfolgt bei den oben genannten Monomeren gegebenenfalls unter Verwendung von Methylchlorid, Methylsulfat oder Diethylsulfat.

Die Polymere, die mit den wässrigen Suspensionen der Schichtsilikate umgesetzt werden, zeichnen sich dadurch aus, dass sie schäumbar sind und thermoplastische Eigenschaften aufweisen. Die Polymere weisen keine elastomeren Eigenschaften auf.

In einer bevorzugten Ausführungsform können die in Schritt ii) erhaltenen Polymer-Schichtsilikat-Nanokomposite mit weiteren Homo- oder Copolymeren enthaltend vinylische Monomere vermischt werden. So können Nanokomposite hergestellt werden, die einen niedrigeren Schichtsilikatanteil aufweisen. Bevorzugt werden als Homo- oder Copolymere thermoplastische Polymere eingesetzt, beispielsweise Polystyrol.

Die Herstellung der Polymer-Latices erfolgt wie bereits bei dem Verfahren zur Herstellung von Polymer-Schichtsilikat-Nanokomposit-Schaumstoffen beschrieben. Auch bezüglich des Mischens in Schritt ii), des Isolierens und Trocknens in Schritt iii) und der Schichtsilikate wird auf das Verfahren zur Herstellung von Polymer-Schichtsilikat-Nanokomposit-Schaumstoffen Bezug genommen.

Die erfindungsgemäß herstellbaren Polymer-Schichtsilikat-Nanokomposite können nach ihrer Herstellung in Schritt iii) isoliert und getrocknet werden. Dieser Schritt ist optional.

Die vorliegende Erfindung betrifft auch einen thermoplastischen Polymer-Schichtsilikat-Nanokomposit, enthaltend ein Polymer, welches hergestellt ist durch freie radikalische Polymerisation von Monomeren ausgewählt aus der Gruppe bestehend aus 2-Vinylpyridin, 4-Vinylpyridin, Ethyl-2-vinylpyridin, 1-Benzyl-4-vinylpyridin, 1,2-Dimethyl-5-vinylpyridin, 1-Methyl-2-vinylchinolin, N-Vnyl-N-methylimidazol, 1-Vinyl-3-methylbenzylimidazol, Styrol, Methylstyrol, Vinyltoluol, Monochlorstyrol, Methyl-, Ethyl-, Propyl-, Isopropyl-, Butyl-, 2-Ethylhexyl-, Hydroxyethyl-, Hydroxypropyl- oder Glycidyl-acrylat, Acrylamid, Methacrylamid, N-Methylol-acrylamid, N-Methylol-methacrylamid, N-Methoxymethyl-acrylamid oder -methacrylamid und Mischungen davon mit 0,2 bis 10 Gew.-% eines Monomers, das Gruppen aufweist, die permanent kationisch sind oder durch Änderung des pH-Wertes kationisch werden, ausgewählt aus der Gruppe bestehend aus N-Vnylimidazol und die Salze davon, und Mischungen davon und Schichtsilikaten ausgewählt aus der Gruppe bestehend aus Smektiten, Vermikuliten, Glimmer und Mischungen davon.

### Beispiele:

### Herstellung eines kationischen Latex:

Die Bestimmung der Teilchengröße des Polymerisats erfolgt durch Lichtstreuung nach ISO 13321 mit einem Malvern Autosizer C an 0,01 gew.%igen Proben.

### Allgemeine Versuchsvorschrift:

Das Polymerisationsgefäß wird mit der jeweiligen Vorlage befüllt und auf 75°C erhitzt. Dann gibt man über zwei getrennte Zuläufe zeitgleich beginnend innerhalb von 2 Stunden den jeweiligen Zulauf 1 und innerhalb 2,5 Stunden den jeweiligen Zulauf 2 unter Beibehaltung der Temperatur in das Polymerisationsgefäß. Nach Beendigung des Zulaufs 2 wird 1 Stunde unter Beibehaltung der Temperatur gerührt. Danach kühlt man auf 25°C ab, anschließend gibt man 4,05 g einer 37 gew.%igen wässrigen Schwefelsäure zu, rührt weitere 15 Minuten und gibt dann innerhalb von 30 Minuten 3,43 g einer 70 gew.%igen wässrigen Lösung von tert.-Butylhydroperoxid und 1,2 g Natriumhydroxymethansulfinat zu. Anschließend gibt man 80 g einer 30 gew.%igen wässrigen Lösung von Cocoamidopropylbetain zu.

### Beispiel 1:

### Vorlage:

| | |
|---|---|
| 330 g | Wasser |
| 55,2 g | 40 gew.%ige wässrige Lösung eines quartenierten Oleylaminethoxylates (Lipamin OK, Marke der BASF-AG) |
| 126,6 g | 20 gew.%ige wässrige Lösung eines ethoxylierten Fettalkohols (Lutensol AT 18, Marke der BASF-AG) |
| 18,6 g | N-Vinylimidazolinium Methylsulfat |
| 0,6 g | 2-Azobis(2-amidinopropan)dihydrochlorid |

### Zulauf 1:

| | |
|---|---|
| 96 g | Wasser |
| 579,6 g | Styrol |
| 80,0 g | 15 gew.%ige wässrige Lösung von Methacrylamid |
| 82,2 g | 20 gew.%ige wässrige Lösung eines ethoxylierten Fettalkohols (Lutensol AT 18, Marke der BASF-AG) |
| 27,3 g | einer 40 gew.%igen wässrigen Lösung eines quartenierten Oleylaminethoxylates (Lipamin OK, Marke der BASF-AG) |

### Zulauf 2:

| | |
|---|---|
| 120 g | Wasser |
| 2,34 g | 2-Azobis(2-aminidopropan)dihydrochlorid |

Der Feststoffgehalt der Dispersion liegt bei 43 %. Die mittels Lichtstreuung bestimmte Teilchengröße liegt bei 71 nm. Der pH-Wert beträgt 6,1.

### Beispiel 2:

### Vorlage:

| | |
|---|---|
| 330 g | Wasser |
| 55,2 g | 40 gew.%ige wässrige Lösung eines quartenierten Oleylaminethoxylates (Lipamin OK, Marke der BASF-AG) |
| 126,6 g | 20 gew.%ige wässrige Lösung eines ethoxylierten Fettalkohols (Lutensol AT 18, Marke der BASF-AG) |
| 0,6 g | 2-Azobis(2-amidinopropan)dihydrochlorid |

### Zulauf 1:

| | |
|---|---|
| 96 g | Wasser |
| 579,6 g | Styrol |
| 8,4 g | Dimethylaminoethylmethacrylat |
| 80,0 g | 15 gew.%ige wässrige Lösung von Methacrylamid |
| 82,2 g | 20 gew.%ige wässrige Lösung eines ethoxylierten Fettalkohols (Lutensol AT 18, Marke BASF-AG) |
| 27,3 g | einer 40 gew.%igen wässrigen Lösung eines quartenierten Oleylaminethoxylates (Lipamin OK, Marke der BASF-AG) |

### Zulauf 2:

| | |
|---|---|
| 120 g | Wasser |
| 2,34 g | 2-Azobis(2-aminidopropan)dihydrochlorid |

Der Feststoffgehalt der Dispersion liegt bei 43 %. Die mittels Lichtstreuung bestimmte Teilchengröße liegt bei 67 nm. Der pH-Wert beträgt 6,5.

### Beispiel 3:

### Vorlage:

| | |
|---|---|
| 330 g | Wasser |
| 55,2 g | 40 gew.%ige wässrige Lösung eines quartenierten Oleylaminethoxylates (Lipamin OK, Marke der BASF-AG) |
| 126,6 g | 20 gew.%ige wässrige Lösung eines ethoxylierten Fettalkohols (Lutensol AT 18, Marke der BASF-AG) |
| 0,6 g | 2-Azobis(2-amidinopropan)dihydrochlorid |

### Zulauf 1:

| | |
|---|---|
| 96 g | Wasser |
| 579,6 g | Styrol |
| 8,4 g | Dimethylaminopropylmethacrylamid |
| 80,0 g | 15 gew.%ige wässrige Lösung von Methacrylamid |
| 82,2 g | 20 gew.%ige wässrige Lösung eines ethoxylierten Fettalkohols (Lutensol AT 18, Marke BASF-AG) |
| 27,3 g | einer 40 gew.%igen wässrigen Lösung eines quartenierten Oleylaminethoxylates (Lipamin OK, Marke der BASF-AG |

### Zulauf 2:

| | |
|---|---|
| 120 g | Wasser |
| 2,34 g | 2-Azubis(2-aminidopropan)dihydrochlorid |

Der Feststoffgehalt der Dispersion liegt bei 43 %. Die mittels Lichtstreuung bestimmte Teilchengröße liegt bei 77 nm. Der pH-Wert beträgt 6,6.

### Beispiel 4:

### Vorlage:

| | |
|---|---|
| 330 g | Wasser |
| 55,2 g | 40 gew.%ige wässrige Lösung eines quartenierten Oleylaminethoxylates (Lipamin OK, Marke der BASF-AG) |
| 126,6 g | 20 gew.%ige wässrige Lösung eines ethoxylierten Fettalkohols (Lutensol AT 18, Marke der BASF-AG) |
| 0,6 g | 2-Azobis(2-amidinopropan)dihydrochlorid |

### Zulauf 1:

| | |
|---|---|
| 96 g | Wasser |
| 579,6 g | Styrol |
| 8,4 g | 1-Vinylimidazol |
| 80,0 g | 15 gew.%ige wässrige Lösung von Methacrylamid |
| 82,2 g | 20 gew.%ige wässrige Lösung eines ethoxylierten Fettalkohols (Lutensol AT 18, Marke der BASF-AG) |
| 27,3 g | einer 40 gew.%igen wässrigen Lösung eines quartenierten Oleylaminethoxylates (Lipamin OK, Marke der BASF-AG) |

### Zulauf 2:

| | |
|---|---|
| 120 g | Wasser |
| 2,34 g | 2-Azobis(2-aminidopropan)dihydrochlorid |

Der Feststoffgehalt der Dispersion liegt bei 43 %. Die mittels Lichtstreuung bestimmte Teilchengröße liegt bei 65 nm. Der pH-Wert beträgt 6,2.

### Beispiel 5:

### Vorlage:

| | |
|---|---|
| 92 g | Wasser |
| 43,5 g | 40 gew.%ige wässrige Lösung eines quartenierten Oleylaminethoxylates (Lipamin OK, Marke BASF-AG) |
| 129,3 g | 20 gew.%ige wässrige Lösung eines ethoxylierten Fettalkohols (Lutensol AT 18, Marke der BASF-AG) |
| 18,6 g | N-Vinylimidazolinium Methylsulfat |
| 0,6 g | 2-Azobis(2-amidinopropan)dihydrochlorid |

### Zulauf 1:

| | |
|---|---|
| 175 g | Wasser |
| 219 g | Styrol |
| 359,1 g | n-Butylacrylat |
| 80,0 g | 15 gew.%ige wässrige Lösung von Methacrylamid |
| 82,2 g | 20 gew.%ige wässrige Lösung eines ethoxylierten Fettalkohols (Lutensol AT 18, Marke BASF-AG) |
| 27,3 g | einer 40 gew.%igen wässrigen Lösung eines quartenierten Oleylaminethoxylates (Lipamin OK, Marke der BASF-AG) |

### Zulauf 2:

| | |
|---|---|
| 87 g | Wasser |
| 2,34 g | 2-Azobis(2-aminidopropan)dihydrochlorid |

Der Feststoffgehalt der Dispersion liegt bei 49 %. Die mittels Lichtstreuung bestimmte Teilchengröße liegt bei 90 nm. Der pH-Wert beträgt 6,2.

### Funktionalisierung 1:

Es wird die Dispersion aus Beispiel 1 verwendet.

40 g Natrium-Montmorillonit (Cloisite Na⁺) werden in 2940 g Wasser dispergiert. Die Lösung wird auf 75°C erhitzt, bevor 448 g der Dispersion GK 201/104 innerhalb eines Zeitintervalls von 10 Minuten zugegeben werden. Nachdem 70 % dieser Dispersion zugegeben worden sind, steigt die Viskosität der Lösung an und das Polymer-Ton-Kompositmaterial beginnt auszufallen. Nach vollständiger Zugabe der Dispersion wird die Lösung auf Raumtemperatur gekühlt, und das Produkt wird durch Filtration isoliert.

Der Mineralstoffgehalt wird zu 24,5 % durch thermische gravimetrische Analyse (TGA) bestimmt. Weitwinkel-Röntgen-Analyse offenbart eine Einlagerungs-Struktur mit einer Abnahme des durchschnittlichen Schichtabstandes von 1,2 bis 1,7 nm.

### Funktionalisierong 2:

Es wird die Dispersion aus Beispiel 2 verwendet.

35 g Natrium-Montmorillonit (Cloisite Na⁺) wird in 2940 g Wasser dispergiert. Diese Lösung wird auf 75°C erhitzt bevor eine Mischung von 151 g der Dispersion GK 201/105 und 20,4 g HCl (Konzentration: 0,6 n HCl) innerhalb eines Zeitintervalls von 10 Minuten zugegeben werden. Nachdem die Zugabe der Mischung zur Ton-Aufschlämmung beendet ist, wird die Mischung bei dieser Temperatur für ca. 1 Stunde gehalten, bevor die Mischung auf Raumtemperatur abgekühlt wird. Schließlich wird das Produkt durch Filtration isoliert. Der Mineralstoffgehalt wird zu 30,6 % durch thermische gravimetrische Analyse (TGA) bestimmt. Weitwinkel-Röntgen-Analyse offenbart eine Einlagerungsstruktur mit einer Abnahme des durchschnittlichen Schichtabstandes von 1,2 bis 1,8 nm.

Die so hergestellten Chargen von Polymer-Schichtsilikat-Nanokompositen werden mittels einer Labormühle pulverisiert und mit Polystyrol 148 G (BASF Aktiengesellschaft) vermischt. Die Extrusion wird auf einem Zwillingsschraubenextruder bei 195°C durchgeführt. Der Mineralstoffgehalt des Endproduktes wird zu 3,2 % (Funktionalisierung 1) bzw. 2,9 % (Funktionalisierung 2) bestimmt.

### Beispiele zur Herstellung des Nanokomposit-Schaums:

### 1. Herstellung der Dispersion

Die Latexdispersionen werden wie vorstehend erläutert hergestellt.

### 2. Ausfällen

In einem 600 ml Becherglas werden 2,68 g Microfloc S (BASF Aktiengesellschaft) in 250 ml entionisiertes Wasser gegeben, so dass eine etwa 10 %ige Suspension des Schichtsilikats entsteht. Diese Mischung wird gründlich etwa 12 Stunden gerührt, um eine gute Dispergierung des Schichtsilikats zu erzielen.

In einem 250 ml Becherglas werden 23,81 g Dispersion aus Beispiel 2 zu 80 ml entionisiertem Wasser gegeben, so dass ein etwa 10 %iger Latex erhalten wird. Der so verdünnte Latex wird kurz gerührt, um Homogenität sicherzustellen.

Anschließend wird der so verdünnte Latex unter heftigem Rühren bei Raumtemperatur zur Schichtsilikat-Suspension gegeben, wobei sofort ein feiner Niederschlag entsteht. Es wird noch mindestens 1 Stunde gerührt und anschließend der Niederschlag abfiltriert. Die Ausbeute des so abgetrennten Niederschlags beträgt 85 %. Die durch Filtration abgetrennte Aufschlämmung wird anschließend 24 Stunden im Vakuumschrank bei 60°C getrocknet. Alternativ kann die Abtrennung über Sedimentation oder Ultrafiltration erfolgen.

### 3. Aufschäumen

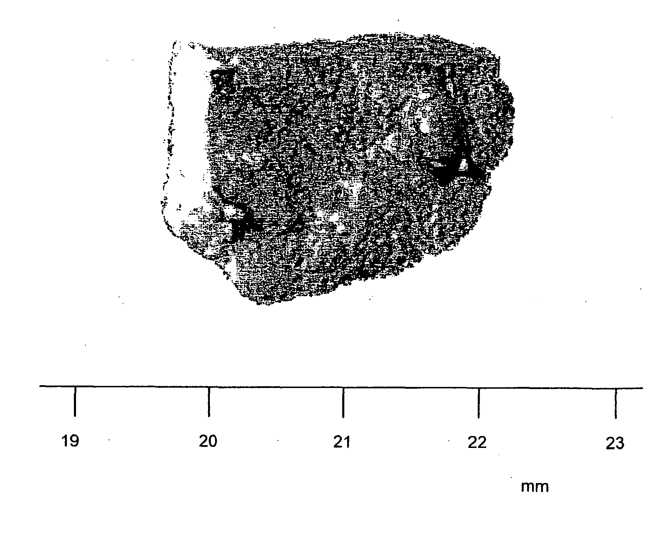

Das nach 2. getrocknete 22,2 gew.%ige Schichtsilikat enthaltende Polystyrol-Nanokomposit wird anschließend heiß verpresst und in 10 x 5 mm große 2 mm dicke Plättchen geschnitten. Diese werden 311 Stunden in Pentan eingelegt, wobei die Pentanaufnahme 10,9 Gew.-% beträgt. Die so mit Pentan beladenen Polystyrol-Nanokomposite werden anschließend in siedendem Wasser aufgeschäumt. Die Dichte des Nanokompositschaums beträgt 50 g/l (siehe Figur 1).

Alternativ lassen sich die nach 2. hergestellten Nanokomposite mit beliebigen Mengen an Polystyrol-Homopolymeren vermischen und somit Nanokomposit-Schäume mit niedrigerem Schichtsilikatanteil herstellen.

## Patentansprüche

1. Verfahren zur Herstellung von Polymer-Schichtsilikat-Nanokomposit-Schaumstoffen, **dadurch gekennzeichnet, dass** es die folgenden Schritte aufweist
a) Mischen von kationisch stabilisierten Polymer-Latices mit wässrigen Suspensionen von anionischen nicht empdrophwheten Schichtsilikaten, die als Gegenionen Alkali- und/oder Erdalkalimetallionen aufweisen, wobei die entsprechenden thermoplastischen Polymer-Schichtsilikat-Nanokomposite ausfallen
b) Isolieren und Trocknen der erhaltenen thermoplastischen Nanokomposite
c) Imprägnieren der getrockneten Nanokomposite mit wenigstens einer organischen Verbindung, die bei 25°C und 1013 mbar flüssig ist und
d) Aufschäumen der imprägnierten Nanokomposite durch Absenken des Druckes und/oder Erhöhung der Temperatur.

2. Verfahren nach Anspruch 1, **dadurch gekennzeichnet, dass** die in Schritt a) des Verfahrens erhaltenen Nanokomposite vor Imprägnierung und Aufschäumung mit weiteren Homo- oder Copolymeren enthaltend vinylische Monomere vermischt werden.

3. Verfahren nach Anspruch 1 oder 2, **dadurch gekennzeichnet, dass** in Schritt a) der Anteil an Schichtsilikat 0,5 bis 50 Gew.-% beträgt, bezogen auf die Summe der Massen von Schichtsilikat und Polymer.

4. Verfahren nach einem der Ansprüche 1 bis 3, **dadurch gekennzeichnet, dass** das Polymer-Latex hergestellt wird durch freie radikalische Polymerisation von vinylischen Monomeren, wobei 0,2 bis 10 Gew.-% davon Gruppen aufweisen, die permanent kationisch sind oder die durch Änderung des pH-Wertes kationisch werden.

5. Verfahren nach Anspruch 4, **dadurch gekennzeichnet, dass** zusätzlich zu den vinylischen Monomeren Tenside vorliegen, wobei 0,2 bis 10 Gew.-% davon Gruppen aufweisen, die permanent kationisch sind oder die durch Änderung des pH-Wertes kationisch werden.

6. Verfahren nach Anspruch 4 oder 5, **dadurch gekennzeichnet, dass** die kationischen Gruppen ausgewählt sind aus der Gruppe bestehend aus Ammonium, Pyridinium, Sulfonium, Phosphonium und Imidazolium.

7. Verfahren nach einem der Ansprüche 1 bis 6, **dadurch gekennzeichnet, dass** die anionischen Schichtsilikate ausgewählt sind aus der Gruppe bestehend aus Smektiten, Vermikuliten, Glimmer und Mischungen davon.

8. Verfahren nach Anspruch 7, **dadurch gekennzeichnet, dass** die Smektite ausgewählt sind aus der Gruppe bestehend aus Montmorilloniten, Hektoriten, Nontroniten, Beidelliten, Volkonskoiten, Saponiten, Sauconiten, Sobocktiten, Sterensiten, Sinforditen und Mischungen davon.

9. Verfahren nach einem der Ansprüche 1 bis 8, **dadurch gekennzeichnet, dass** die wenigstens eine organische Flüssigkeit ein C₁-C₁₂-Kohlenwasserstoff ist.

10. Thermoplastischer Polymer-Schichtsilikat-Nanokomposit-Schaumstoff, enthaltend wenigstens ein Polymer, welches hergestellt wird durch freie radikalische Polymerisation von vinylischen Monomeren, wobei 0,2 bis 10 Gew.-% davon Gruppen aufweisen, die permanent kationisch sind oder die durch Änderung des pH-Wertes kationisch werden und gegebenenfalls Tenside, wobei 0,2 bis 10 Gew.-% davon Gruppen aufweisen, die permanent kationisch sind oder die durch Änderung des pH-Wertes kationisch werden, und nicht empdrophwheten Schichtsilikate ausgewählt sind aus der Gruppe bestehend aus Smektiten, Vermikuliten, Glimmer und Mischungen davon.

11. Verfahren zur Herstellung von thermoplastischen Polymer-Schichtsilikat-Nanokompositen, **dadurch gekennzeichnet, dass** es die folgenden Schritte aufweist
i) Herstellung von kationisch stabilisierten Polymer-Latices durch Umsetzung von Monomeren ausgewählt aus der Gruppe bestehend aus 2-Vinylpyridin, 4-Vinylpyridin, Ethyl-2-vinylpyridin, 1-Benzyl-4-vinylpyridin, 1,2-Dimethyl-5-vinylpyridin, 1-Methyl-2-vinylchinolin, N-Vinyl-N-methylimidazol, 1-Vinyl-3-methylbenzylimidazol, Styrol, Methylstyrol, Vinyltoluol, Monochlorstyrol, Methyl-, Ethyl-, Propyl-, Isopropyl-, Butyl-; 2-Ethylhexyl-, Hydroxyethyl-, Hydroxypropyl- oder Glycidyl-acrylat, Acrylamid, Methacrylamid, N-Methylol-acrylamid, N-Methylol-methacrylamid, N-Methoxymethyl-acrylamid oder - methacrylamid und Mischungen davon mit 0,2 bis 10 Gew.-% eines Monomers, das Gruppen aufweist, die permanent kationisch sind oder durch Änderung des pH-Wertes kationisch werden, ausgewählt aus der Gruppe bestehend aus N,N-Dimethylaminoethyl(meth)acrylat, N-Vinylimidazol und die Salze davon, und Mischungen davon,
wobei zusätzlich zu den vinylischen monomeren Tenside vorliegen, wobei 0,2 bis 10 gew-% davon Gruppen aufweisen, die permanent kationisch said oder die durch Änderung des pH-Wertes kationisch werden
ii) Mischen der so erhaltenen kationischen Latices mit wässrigen Suspensionen von anionischen nicht hydrophobierten Schichtsilikaten, die als Gegenionen Alkali- und/oder Erdalkalimetallionen aufweisen, wobei die entsprechenden Polymer-Schichtsilikat-Nanokomposite ausfallen und
iii) gegebenenfalls Isolieren und Trocknen der erhaltenen Nanokomposite.

12. Verfahren nach Anspruch 12, **dadurch gekennzeichnet, dass** nach Schritt ii) die erhaltenen Polymer-Schichtsilikat-Nanokomposite mit weiteren Homo- oder Copolymeren enthaltend vinylische Monomere vermischt werden.

13. Thermoplastischer Polymer-Schichtsilikat-Nanokomposit, enthaltend wenigstens ein Polymer, welches hergestellt ist durch freie radikalische Polymerisation von Monomeren ausgewählt aus der Gruppe bestehend aus 2-Vinylpyridin, 4-Vinylpyridin, Ethyl-2-vinylpyridin, 1-Benzyl-4-vinylpyridin, 1,2-Dimethyl-5-vinylpyridin, 1-Methyl-2-vinylchinolin, N-Vinyl-N-methylimidazol, 1-Vinyl-3-methylbenzylimidazol, Styrol, Methylstyrol, Vinyltoluol, Monochlorstyrol, Methyl-, Ethyl-, Propyl-, Isopropyl-, Butyl-, 2-Ethylhexyl-, Hydroxyethyl-, Hydroxypropyl- oder Glycidyl-acrylat, Acrylamid, Methacrylamid, N-Methylol-acrylamid, N-Methylol-methacrylamid, N-Methoxymethyl-acrylamid oder -methacrylamid und Mischungen davon mit 0,2 bis 10 Gew.-% einer. Monomers, das Gruppen aufweist, die permanent kationisch sind oder durch Änderung des pH-Wertes kationisch werden, ausgewählt aus der Gruppe betstehend aus N-Vinylimidazol und die Salze davon und Mischungen davon und Schichtsilikate ausgewählt aus der Gruppe bestehend aus nicht hydrophobierten Smektiten, Vermikuliten, Glimmer und Mischungen davon.

## Claims

1. A process for production of polymer-phyllosilicate nanocomposite foams, which comprises the following steps
a) mixing of cationically stabilized polymer latices with aqueous suspensions of anionic nonhydrophobicized phyllosilicates in which the counterions present comprise alkali metal ions and/or comprise alkaline earth metal ions, whereupon the corresponding thermoplastic polymer-phyllosilicate nanocomposites precipitate,
b) isolation and drying of the resultant thermoplastic nanocomposites,
c) impregnation of the dried nanocomposites with at least one organic compound which is liquid at 25°C and 1013 mbar, and
d) foaming of the impregnated nanocomposites via lowering of the pressure and/or raising of the temperature.

2. The process according to claim 1, wherein, prior to impregnation and foaming, the nanocomposites obtained in step a) of the process are mixed with other homo- or copolymers comprising vinylic monomers.

3. The process according to claim 1 or 2, wherein the proportion of phyllosilicate in step a) is from 0.5 to 50% by weight, based on the entirety of the weights of phyllosilicate and polymer.

4. The process according to any of claims 1 to 3, wherein the polymer latex is prepared via free-radical polymerization of vinylic monomers, where from 0.2 to 10% by weight thereof have groups which are permanently cationic or which become cationic via change of pH.

5. The process according to claim 4, wherein, in addition to the vinylic monomers, surfactants are present, where from 0.2 to 10% by weight thereof have groups which are permanently cationic or which become cationic via change of pH.

6. The process according to claim 4 or 5, wherein the cationic groups have been selected from the group consisting of ammonium, pyridinium, sulfonium, phosphonium, and imidazolium.

7. The process according to any of claims 1 to 6, wherein the anionic phyllosilicates have been selected from the group consisting of smectites, vermiculites, mica, and mixtures thereof.

8. The process according to claim 7, wherein the smectites have been selected from the group consisting of montmorillonites, hectorites, nontronites, beidellites, volkonskoites, saponites, sauconites, sobocktites, sterensites, sinfordites, and mixtures thereof.

9. The process according to any of claims 1 to 8, wherein the at least one organic liquid is a C₁-C₁₂ hydrocarbon.

10. A thermoplastic polymer-phyllosilicate nanocomposite foam, comprising at least one polymer which is prepared via free-radical polymerization of vinylic monomers, where from 0.2 to 10% by weight thereof have groups which are permanently cationic or which become cationic via change of pH, and, if appropriate, comprising surfactants, where from 0.2 to 10% by weight thereof have groups which are permanently cationic or which become cationic via change of pH, and nonhydrophobicized phyllosilicates have been selected from the group consisting of smectites, vermiculites, mica, and mixtures thereof.

11. A process for preparation of thermoplastic polymer-phyllosilicate nanocomposites, which comprises the following steps
i) preparation of cationically stabilized polymer latices via reaction of monomers selected from the group consisting of 2-vinylpyridine, 4-vinylpyridine, ethyl-2-vinylpyridine, 1-benzyl-4-vinylpyridine, 1,2-dimethyl-5-vinylpyridine, 1-methyl-2-vinylquinoline, N-vinyl-N-methylimidazole, 1-vinyl-3-methylbenzylimidazole, styrene, methylstyrene, vinyltoluene, monochlorostyrene, methyl, ethyl, propyl, isopropyl, butyl, 2-ethylhexyl, hydroxyethyl, hydroxypropyl, or glycidyl acrylate, acrylamide, methacrylamide, N-methylolacrylamide, N-methylolmethacrylamide, N-methoxymethylacrylamide or -methacrylamide, and mixtures thereof with from 0.2 to 10% by weight of a monomer which has groups which are permanently cationic or become cationic via change of pH, selected from the group consisting of N,N-dimethylaminoethyl (meth)acrylate, N-vinylimidazole, and the salts thereof, and mixtures thereof, where, in addition to the vinylic monomers, surfactants are present, where from 0.2 to 10% by weight thereof have groups which are permanently cationic or which become cationic via change of pH.
ii) mixing of the resultant cationic latices with aqueous suspensions of anionic nonhydrophobicized phyllosilicates in which the counterions present comprise alkali metal ions and/or comprise alkaline earth metal ions, whereupon the corresponding polymer-phyllosilicate nanocomposites precipitate, and
iii) optionally isolation and drying of the nanocomposites obtained.

12. The process according to claim 12, wherein, after step ii), the polymer-phyllosilicate nanocomposites obtained are mixed with other homo- or copolymers comprising vinylic monomers.

13. A thermoplastic polymer-phyllosilicate nanocomposite comprising at least one polymer which has been prepared via free-radical polymerization of monomers selected from the group consisting of 2-vinylpyridine, 4-vinylpyridine, ethyl-2-vinylpyridine, 1-benzyl-4-vinylpyridine, 1,2-dimethyl-5-vinylpyridine, 1-methyl-2-vinylquinoline, N-vinyl-N-methylimidazole, 1-vinyl-3-methylbenzylimidazole, styrene, methylstyrene, vinyltoluene, monochlorostyrene, methyl, ethyl, propyl, isopropyl, butyl, 2-ethylhexyl, hydroxyethyl, hydroxypropyl, or glycidyl acrylate, acrylamide, methacrylamide, N-methylolacrylamide, N-methylolmethacrylamide, N-methoxymethylacrylamide or -methacrylamide, and mixtures thereof with from 0.2 to 10% by weight of a monomer which has groups which are permanently cationic or become cationic via change of pH, selected from the group consisting of N-vinylimidazole, and the salts thereof, and mixtures thereof, and phyllosilicates selected from the group consisting of nonhydrophobicized smectites, vermiculites, mica, and mixtures thereof.

## Revendications

1. Procédé de fabrication de mousses nanocomposites polymère-silicate en feuillets, **caractérisé en ce qu'**il comprend les étapes suivantes :
a) le mélange de réseaux polymères stabilisés cationiquement avec des suspensions aqueuses de silicates en feuillets anioniques non hydrophobés, qui comprennent en tant que contre-ions des ions métalliques alcalins et/ou alcalino-terreux, les nanocomposites polymère-silicate en feuillets thermoplastiques correspondants se formant,
b) l'isolement et le séchage des nanocomposites thermoplastiques obtenus,
c) l'imprégnation des nanocomposites séchés avec au moins un composé organique, qui est liquide à 25 °C et 1 013 mbar, et
d) le moussage des nanocomposites imprégnés par réduction de la pression et/ou augmentation de la température.

2. Procédé selon la revendication 1, **caractérisé en ce que** les nanocomposites obtenus à l'étape a) du procédé sont mélangés avec des homo- ou copolymères supplémentaires contenant des monomères vinyliques avant l'imprégnation et le moussage.

3. Procédé selon la revendication 1 ou 2, **caractérisé en ce qu'**à l'étape a), la proportion de silicate en feuillets est de 0,5 à 50 % en poids, par rapport à la somme des masses du silicate en feuillets et du polymère.

4. Procédé selon l'une quelconque des revendications 1 à 3, **caractérisé en ce que** le latex polymère est fabriqué par polymérisation radicalaire de monomères vinyliques, 0,2 à 10 % en poids d'entre eux comprenant des groupes qui sont cationiques en permanence ou qui deviennent cationiques par modification de la valeur du pH.

5. Procédé selon la revendication 4, **caractérisé en ce que** des tensioactifs sont présents en plus des monomères vinyliques, 0,2 à 10 % en poids d'entre eux comprenant des groupes qui sont cationiques en permanence ou qui deviennent cationiques par modification de la valeur du pH.

6. Procédé selon la revendication 4 ou 5, **caractérisé en ce que** les groupes cationiques sont choisis dans le groupe constitué par ammonium, pyridinium, sulfonium, phosphonium et imidazolium.

7. Procédé selon l'une quelconque des revendications 1 à 6, **caractérisé en ce que** les silicates en feuillets anioniques sont choisis dans le groupe constitué par les smectites, les vermiculites, les micas et leurs mélanges.

8. Procédé selon la revendication 7, **caractérisé en ce que** les smectites sont choisies dans le groupe constitué par les montmorillonites, les hectorites, les nontronites, les beidéllites, les volkonskoïtes, les saponites, les sauconites, les sobocktites, les stérensites, les sinfordites et leurs mélanges.

9. Procédé selon l'une quelconque des revendications 1 à 8, **caractérisé en ce que** le ou les liquides organiques sont un hydrocarbure en C₁-C₁₂.

10. Mousse nanocomposite polymère-silicate en feuillets thermoplastique, contenant au moins un polymère, qui est fabriqué par polymérisation radicalaire de monomères vinyliques, 0,2 à 10 % en poids d'entre eux comprenant des groupes qui sont cationiques en permanence ou qui deviennent cationiques par modification de la valeur du pH, et éventuellement de tensioactifs, 0,2 à 10 % en poids d'entre eux comprenant des groupes qui sont cationiques en permanence ou qui deviennent cationiques par modification de la valeur du pH, et des silicates en feuillets non hydrophobés choisis dans le groupe constitué par les smectites, les vermiculites, les micas et leurs mélanges.

11. Procédé de fabrication de nanocomposites polymère-silicate en feuillets thermoplastiques, **caractérisé en ce qu'**il comprend les étapes suivantes :
i) la fabrication de réseaux polymères stabilisés cationiquement par mise en réaction de monomères choisis dans le groupe constitué par la 2-vinylpyridine, la 4-vinylpyridine, l'éthyl-2-vinylpyridine, la 1-benzyl-4-vinylpyridine, la 1,2-diméthyl-5-vinylpyridine, la 1-méthyl-2-vinylquinoline, le N-vinyl-N-méthylimidazole, le 1-vinyl-3-méthylbenzylimidazole, le styrène, le méthylstyrène, le vinyltoluène, le monochlorostyrène, l'acrylate de méthyle, d'éthyle, de propyle, d'isopropyle, de butyle, de 2-éthylhexyle, d'hydroxyéthyle, d'hydroxypropyle ou de glycidyle, l'acrylamide, le méthacrylamide, le N-méthylol-acrylamide, le N-méthylol-méthacrylamide, le N-méthoxyméthyl-acrylamide ou -méthacrylamide et leurs mélanges avec 0,2 à 10% en poids d'un monomère qui comprend des groupes qui sont cationiques en permanence ou qui deviennent cationiques par modification de la valeur du pH, choisis dans le groupe constitué par le (méth)acrylate de N,N-diméthylaminoéthyle, le N-vinylimidazole et leurs sels, et leurs mélanges, des tensioactifs étant présents en plus des monomères vinyliques, 0,2 à 10 % en poids d'entre eux comprenant des groupes qui sont cationiques en permanence ou qui deviennent cationiques par modification de la valeur du pH,
ii) le mélange des réseaux cationiques ainsi obtenus avec des suspensions aqueuses de silicates en feuillets anioniques non hydrophobés, qui comprennent en tant que contre-ions des ions métalliques alcalins et/ou alcalino-terreux, les nanocomposites polymère-silicate en feuillets correspondants se formant, et
iii) éventuellement l'isolement et le séchage des nanocomposites obtenus.

12. Procédé selon la revendication 12, **caractérisé en ce qu'**après l'étape ii), les nanocomposites polymère-silicate en feuillets obtenus sont mélangés avec des homo- ou copolymères supplémentaires contenant des monomères vinyliques.

13. Nanokomposite polymère-silicate en feuillets thermoplastique, contenant au moins un polymère, qui est fabriqué par polymérisation radicalaire de monomères choisis dans le groupe constitué par la 2-vinylpyridine, la 4-vinylpyridine, l'éthyl-2-vinylpyridine, la 1-benzyl-4-vinylpyridine, la 1,2-diméthyl-5-vinylpyridine, la 1-méthyl-2-vinylquinoline, le N-vinyl-N-méthylimidazole, le 1-vinyl-3-méthylbenzylimidazole, le styrène, le méthylstyrène, le vinyltoluène, le monochlorostyrène, l'acrylate de méthyle, d'éthyle, de propyle, d'isopropyle, de butyle, de 2-éthylhexyle, d'hydroxyéthyle, d'hydroxypropyle ou de glycidyle, l'acrylamide, le méthacrylamide, le N-méthylol-acrylamide, le N-méthylol-méthacrylamide, le N-méthoxyméthyl-acrylamide ou -méthacrylamide et leurs mélanges avec 0,2 à 10 % en poids d'un monomère qui comprend des groupes qui sont cationiques en permanence ou qui deviennent cationiques par modification de la valeur du pH, choisis dans le groupe constitué par le N-vinylimidazole et leurs sels, et leurs mélanges, et des silicates en feuillets choisis dans le groupe constitué par les smectites, vermiculites, micas non hydrophobés et leurs mélanges.
